# EUROPÄISCHE PATENTSCHRIFT

(11) **EP 2 986 934 B1**
(45) Veröffentlichungstag und Bekanntmachung des Hinweises auf die Patenterteilung: **11.03.2020**
(21) Anmeldenummer: 14736269.3
(22) Anmeldetag: 22.04.2014
(51) Int. Cl.: G01B 11/24, D21F 1/44, G01B 11/25

(54) **PRÜFVERFAHREN**
CHECKING METHOD
PROCÉDÉ DE VÉRIFICATION

(30) Priorität: 19.04.2013 DE 102013104004
(43) Veröffentlichungstag der Anmeldung: 24.02.2016
(73) Patentinhaber: Schoen + Sandt Machinery GmbH, 66955 Pirmasens (DE)
(72) Erfinder: HEITZMANN, Bernd, 66969 Lemberg (DE); BALDAUF, Wolfgang Konstantin, 84375 Kirchdorf am Inn (DE)
(74) Vertreter: Geitz Truckenmüller Lucht Christ
(86) Internationale Anmeldenummer: PCT/DE2014/100138
(87) Internationale Veröffentlichungsnummer: WO 2014/169904

(56) Entgegenhaltungen:
- WO-A1-2009/048415
- WO-A1-2011/010211
- US-A1- 2008 032 066
- US-B1- 7 679 757

## Beschreibung

Die vorliegende Erfindung betrifft ein Verfahren zur Durchführung von Qualitätsprüfungen an Rundsiebzylindem, Egoutteuren oder Spannzylindern zur Herstellung von Wasserzeichenpapier, bei dem ein auf die Oberfläche eines betrachteten Zylinders gerichteter Bildsensor entweder während einer rotatorischen und/oder translatorischen Relativbewegung zwischen Bildsensor und betrachtetem Zylinder um die Längsachse des Zylinders bzw. in deren Richtung, oder zwischen zwei solchen Relativbewegungen Bilddaten erfasst und an eine Datenverarbeitungseinrichtung übermittelt, welche diese Bilddaten zu einer zumindest teilweisen Abbildung der Oberfläche des Zylinders kombiniert und die Abbildung einer Bildauswertung zuführt.

Prüfverfahren zu langen, profilierten oder runden Werkstücken sind bereits im Stand der Technik bekannt. So beschreibt die US 7,679.757 B1 ein kontaktfreies Messverfahren, bei dem vier Bildgeber um ein zylindrisches Werkstück herum angeordnet sind und dessen Form und Oberfläche abtasten und das Ergebnis dieser Abtastung auswerten.

Ein Verfahren zum kontinuierlichen berührungsfreien Messen von Profilen ist aus der DE 40 37 383 A1 bekannt, wobei hier während der Vermessung ein dreidimensionales Bild des Werkstücks erstellt wird.

Weitere Verfahren sind in den Schriften WO 2009/048415 A1, US 2008/0032066 A1, US 2003/0231793 A1, DE 10 2011 000 304 A1, DE 100 19 386 A1 und US 5,712,803 A beschrieben.

Rundsiebzylinder wie eingangs genannt werden zur Herstellung von Papier, beispielsweise zur Herstellung von Sicherheitspapier mit darin eingearbeiteten Wasserzeichen eingesetzt. Mit dem Rundsiebzylinder wird ein dünner Zellulosebrei zu Papier verarbeitet, welcher durch das Sieb entwässert wird. Aufgrund von Erhebungen und Vertiefungen des Siebs entstehen Verdickungen und Verdünnungen in dem herzustellenden Papier, welche zumindest im Gegenlicht als Wasserzeichen wahrgenommen werden können.

Um eine gleichbleibende Qualität der Wasserzeichen und eine definierte Farbgebung derselben gewährleisten zu können, ist es erforderlich, die Erhöhungen und Vertiefungen dem Sieb sehr exakt einzuprägen, sowohl hinsichtlich des verursachten Höhenprofils als auch der Ausrichtung und Absolutposition. Insbesondere ist es auch üblich geworden, die Erhöhungen und Vertiefungen in mehreren unterschiedlichen Arbeitsschritten, etwa durch Aufschweißen so genannter Elektrotypen und deren anschließendem Überprägen, herzustellen.

Die hier bestehenden Qualitätserfordernisse müssen sorgfältig geprüft werden, wozu einerseits eine Prüfung unmittelbar nach der Herstellung eines Rundsiebzylinders durchgeführt wird, bei welcher die exakte Anordnung der Prägungen geprüft wird und gleichzeitig Referenzdaten erhoben werden, aber andererseits vor und/oder nach einer Benutzung des Rundsiebzylinders auch dessen Abnutzung regelmäßiger Kontrolle unterzogen werden muss, um während der Papierherstellung auftretende Stauchungen, Verstopfungen oder das Abfallen von Elektrotypen zu erkennen.

Dies wird im Stand der Technik üblicherweise durch händische Kontrollen realisiert, wobei bei einer Erstkontrolle die Qualität und Position der Prägungen und Elektrotypen überprüft wird.

Vor dem Hintergrund immer präziserer und aufwändigerer Wasserzeichen liegt der vorliegenden Erfindung die Aufgabe zu Grunde, eine Prüfvorrichtung und ein Verfahren zur Durchführung von Qualitätsprüfungen an Rundsiebzylindern zur Herstellung von Wasserzeichenpapier anzugeben, welches eine exakte und verlässliche sowie Zeit sparende Prüfung sowohl als Erstvermessung als auch im Zuge wiederholter Abnutzungsprüfungen erlaubt. Zudem soll es die angesrebte Lösung ermöglichen, fertig verspannte Rundsiebzylinder diagonal zu vermessen.

Gelöst wird diese Aufgabe durch ein Verfahren zur Durchführung von Qualitätsprüfungen an solchen Rundsiebzylindern gemäß den Merkmalen des Anspruchs 1. Sinnvolle Ausgestaltungen des Verfahrens können den abhängigen Ansprüchen entnommen werden.

Erfindungsgemäß ist es vorgesehen, einen Rundsiebzylinder auf einem Ständer aufzulagern und mit einem Bildsensor abzutasten. Der Bildsensor erfasst hierbei das Höhenprofil des Rundsiebzylinders, setzt dieses Höhenprofil in Bilddaten um und übermittelt diese Bilddaten an eine Datenverarbeitungseinrichtung. Die Datenverarbeitungseinrichtung sammelt die Bilddaten und setzt diese zu einem Bild zusammen, das einen Teil der Oberfläche des Rundsiebzylinders bis hin zur vollständigen Oberfläche repräsentiert. Die Datenverarbeitungseinrichtung wird dann ausschließlich anhand von Höhenwerten der erfassten Punkte die Qualität der Oberfläche des Rundsiebzylinders überprüfen.

Hierzu werden Bildsensor und Rundsiebzylinder zueinander in Relativbewegung versetzt, um eine Abtastung der gesamten Oberfläche des Rundsiebzylinders mit einem oder mehreren Bildsensoren zu ermöglichen. Es ist hierzu vorgesehen, den Bildsensor an einer Position des Rundsiebzylinders auszurichten und den Rundsiebzylinder dann in eine Rotation um seine Längsachse herum zu versetzen. während der Rotation wird der Bildsensor mit einer vorgegebenen Frequenz einen ringförmigen Bildstreifen der Oberfläche nach und nach erfassen und an die Datenverarbeitungseinrichtung übermitteln.

Sinnvoll ist hierbei, dass eine kontinuierliche und gleichmäßige Rotation des Rundsiebzylinders unter dem Bildsensor hindurch erfolgt. Gegebenenfalls muss der Rundsiebzylinder mehr als eine vollständige Umdrehung für die Erfassung eines Bildstreifens vollführen, um zunächst eine Anlaufphase und schließlich eine Auslaufphase zu haben.

Durch die Übersendung reiner Höhenwerte an die Datenverarbeitungseinrichtung ist es dieser möglich, die eigentliche Qualitätsprüfung des Rundsiebzylinders vorzunehmen und aufgrund der von dem Bildsensor erfassten Daten eine exakte Auswertung durchzuführen. Neben absoluten Positionsdaten der einzelnen Bildpunkte übermittelt der Bildsensor zu jedem Bildpunkt auch ein Höhenniveau, welches durch die Zuordnung einer Farbgebung des einzelnen Bildpunkts für den Bediener dargestellt wird. Vorgesehen ist die Verwendung unterscheidbarer Graustufen, jedoch ist auch eine vielfarbige Skalierung ohne weiteres einsetzbar.

Die eigentliche Ermittlung der Bildpunkte und deren Höhenlagen kann durch verschiedene, idealerweise möglichst hochauflösende, Abstandsmessverfahren realisiert werden. Bevorzugtermaßen kann als Messverfahren die Lasertriangulation eingesetzt werden, welche einen auf die Oberfläche des Rundsiebzylinders einstrahlenden Laser vorsieht. Der Laser wird von der Oberfläche des Rundsiebzylinders reflektiert und auf den Bildsensor gelenkt, dessen Achse mit dem Laserstrahl einen spitzen Winkel einschließt und welcher etwa als Matrixkamera, als ortsauflösende Fotodiode, als CMOS-Kamera oder als CCD-(Charge-coupled device) Chip ausgeführt sein kann. Auch künftige Kameralösungen werden, ihre Fähigkeit zur Ortsauflösung vorausgesetzt, im Rahmen der Erfindung einsetzbar sein.

Etwa im Fall der Verwendung einer Matrixkamera wird der von der Oberfläche des Rundsiebzylinders reflektierte Laser auf eine Sensorzelle treffen, welche einen Rückschluss auf die Höhenlage der Reflexion ermöglicht. In einer anderen Höhenlage wird der Laser auf eine andere Sensorzelle auftreffen, so dass die zu einem Zeitpunkt mit einem Maximum der Reflexion beaufschlagte Sensorzelle die Höhenlage des anvisierten Oberflächenpunktes entspricht. Jeder Sensorzelle kann daher ein eigener Farbwert bzw. Grauwert zugeordnet sein, der von der Datenverarbeitungseinrichtung dann optisch interpretiert werden kann.

Immanent wichtig ist es, feststellen zu können, zu welchem Zeitpunkt welcher Punkt der Oberfläche des Rundsiebzylinders von dem Laser angestrahlt und dadurch von dem Bildsensor erfasst wird. Dazu muss der Rundsiebzylinder entweder in eine exakt gleichförmige Rotation versetzt werden oder über einen Positionsgeber verfügen, welcher Signale in Abhängigkeit von der Drehposition des Rundsiebzylinders an den Sensorkopf mit dem Bildsensor oder auch an die Datenverarbeitungseinrichtung übermittelt. Anhand dieser Positionsdaten des Rundsiebzylinders wird der Bildsensor seine Abtastrate einstellen, so dass Verzerrungen in dem entstehenden Bild vermieden werden können.

Zwischen der Aufnahme zweier Bildstreifen erfolgt eine Verschiebung des Sensorkopfes parallel zur Längsachse des Rundsiebzylinders. Diese Verschiebung kann etwa mittels eines Linearantriebs erfolgen, aber auch eine Schlittenmontage des Sensorkopfes ist ohne Weiteres möglich. Die Verschiebung erfolgt hierbei mit einigem Vorteil so, dass keine aneinander stoßenden, sondern einander überlappende Bildstreifen entstehen, die von der Datenverarbeitungseinrichtung anhand der aufgezeichneten Bildinformationen aneinander ausgerichtet werden können.

Neben einer Verfahrbarkeit des Sensorkopfes parallel zur Längsachse des Rundsiebzylinders kann auch eine quer hierzu erfolgende Verschiebung des Sensorkopfes vorgesehen sein. Sinnvollerweise soll der Sensorkopf stets bezüglich der Oberfläche des Rundsiebzylinders einen exakt gleichen Abstand einnehmen. Dies erlaubt eine eindeutige Zuordnung zwischen einer Höhenlage und den im Bildsensor beaufschlagten Sensorzellen, so dass bei abweichenden Abständen zwischen Sensorkopf und Sieboberfläche stets eine neue Kalibrierung vorgenommen werden müsste. Auch ist die Einhaltung eines festen Abstandes von der Oberfläche wichtig, um Verformungen auch der Oberfläche feststellen zu können. Da das Sieb des Rundsiebzylinders auf einem innen liegenden Spannzylinder aufgezogen ist, kann es mit der Zeit vorkommen, dass die einzelnen Spannrippen des Spannzylinders sich in der Oberfläche abdrücken und so die Oberfläche nicht mehr rund sondern vieleckig wird. Um eine exakte Positionierung bezüglich der Oberfläche des Rundsiebzylinders zu ermöglichen, kann daher auch eine Verschiebung des Sensorkopfes in Richtung auf die Längsachse zu und von dieser weg vorgesehen sein, um die unterschiedlichen Durchmesser der Rundsiebzylinder vermessen zu können.

Im Zuge der schließlich durchzuführenden Vermessung der Rundsiebzylinderoberfläche anhand der von der Datenverarbeitungseinrichtung aufgezeichneten Abbildung wird dann eine Mustererkennung durchgeführt, durch welche eine Erkennung der eingeprägten Bildobjekte erlaubt. Nach einer Erfassung der Bildobjekte können diese mit Referenzbildobjekten verglichen werden, um so festzustellen, ob die Höhenlagen der einzelnen Bildpunkte innerhalb einstellbarer Schwellenwerte liegen und damit den Qualitätsanforderungen genügen. Die Datenverarbeitungseinrichtung wird diese Prüfung anhand der erfassten Höhenwerte durchführen, die mit den Höhenwerten der Referenzmessung verglichen werden können. Ebenfalls werden die Absolutpositionen der einzelnen Bildobjekte ermittelt, indem die Abstände von bestimmten, aufgefundenen Referenzpunkten der einzelnen Bildobjekte miteinander verglichen werden. Auch eine Diagonalvermessung wie im Stand der Technik kann mit dieser Lösung durchgeführt werden, indem Abstände von Bildobjekten entlang der Diagonalen zu anderen Bildobjekten gemessen und mit gespeicherten Vorgaben verglichen werden.

Eine undefinierte Höhenlage wird regelmäßig bei den Sieblöchern festgestellt, da der Laser von diesen nicht in definierter Weise auf den Bildsensor zurückgeworfen wird. Diese undefinierten, auffälligen Messungen wird die Datenverarbeitungseinrichtung mithilfe von an sich bekannten Bildbearbeitungsprozessen und -verfahren kompensieren und das Bild letztlich so glätten, dass eine sinnvolle Auswertung erfolgen kann.

Die vorstehend beschriebene Erfindung wird im Folgenden anhand eines Ausführungsbeispiels näher erläutert.

Es zeigen
- Figur 1: einen Rundsiebzylinder mit bezüglich diesem ange-ordnetem Sensorkopf in einer schematischen, perspektivischen Darstellung, sowie
- Figur 2: das Funktionsprinzip der erfindungsgemäß angewendeten Lasertriangulation in einer schematischen Darstellung.

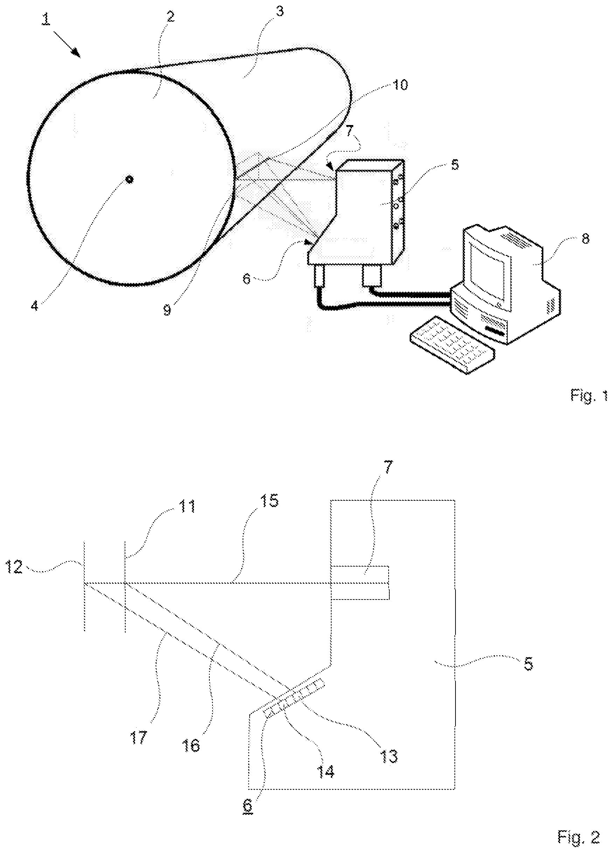

Figur 1 zeigt einen Rundsiebzylinder 1, welche hier in einer nicht näher dargestellten Art und Weise auf einer Halterung um seine Längsachse 4 herum rotierbar aufgelagert ist. Der Rundsiebzylinder 1 besteht im Wesentlichen aus einem Sieb 3, dessen Oberfläche mithilfe eines Sensorkopfes 5 abgetastet werden soll, und einem Spannzylinder 2, der das Sieb 3 trägt und formstabil aufspreizt. Vor dem Aufspannen des Siebs 3 auf den Spannzylinder 2 sind dem Sieb 3 mithilfe einer Prägevorrichtung Erhebungen und Vertiefungen zugefügt worden welcher bei einer Papierherstellung unter Verwendung des Siebs Wasserzeichen in dem Papier ergeben. Um die exakte Positionierung und die korrekte Höhenprofilierung der Prägungen zu verifizieren, wird zunächst der Sensorkopf 5 in einen definiert vorgegebenen Abstand, vorliegend 337 mm, von der Oberfläche des Rundsiebzylinders 1 gebracht.

Dem Sensorkopf 5 ist eine Matrixkamera 6 und eine Lasereinheit 7 zugeordnet, wobei die Lasereinheit 7 senkrecht auf die Oberfläche des Rundsiebzylinders 1 einstrahlt. Eine Reflexion eines auf die Oberfläche des Rundsiebzylinders 1 projizierten Laserstreifens 10 wird von dort auf die Matrixkamera 6 zurückgeworfen, welche das reflektierte Laserlicht eines Ausschnitts 9 der Oberfläche mit all ihren Sensorzellen 13, 14 gleichzeitig erfasst und die hierbei ermittelte Information an eine Datenverarbeitungseinrichtung 8 weiterleitet, die aus den Sensorwerten Bilddaten ableitet. Hierbei werden entweder direkt mithilfe einer Auswerteeinheit im Sensorkopf 5 oder von der Datenverarbeitungseinrichtung 8 aus den ermittelten Höhenwerten einzelner Punkte korrespondierende Grauwerte ermittelt, die dem betrachteten Bildpunkt dann zugeordnet und dem Betrachter visuell dargestellt werden.

Im Zuge der Rotation des Rundsiebzylinders 1 um seine Längsachse 4 wird bei fortwährender Bildaufzeichnung durch die Matrixkamera 6 ein Bildstreifen aufgezeichnet, welcher in der Datenverarbeitungseinrichtung 8 gespeichert und nach der Entstehung weiterer Bildstreifen zu einem Gesamtbild zusammengesetzt werden. Hierbei wird eine Überlappung bei der Aufzeichnung der Bildstreifen realisiert, um Zwischenräume zwischen den Bildstreifen zu vermeiden und eine zusätzliche gegenseitige Ausrichtung der Bildstreifen zu bewirken. Zur Aufzeichnung weiterer Bildstreifen wird der Sensorkopf 5 mithilfe eines Linearantriebs in Richtung der Längsachse 4 des Rundsiebzylinders 1 verfahren und anschließend beginnt die Rotation des Rundsiebzylinders 1 erneut. Dieser Vorgang wird wiederholt, bis die Oberfläche des Rundsiebzylinders 1 vollständig abgetastet worden ist und der Datenverarbeitungseinrichtung 8 ein vollständiges Gesamtbild vorliegt.

Anhand des Gesamtbildes wird schließlich von der Datenverarbeitungseinrichtung 8 eine Auswertung durchgeführt, welche mit an sich aus der Bildverarbeitung bekannten Auswerteverfahren arbeitet. Positionen und Abstände einzelner Bildobjekte, welche den auf der Oberfläche des Rundsiebzylinders 1 angeordneten Prägungen entsprechen, werden hierbei vermessen und mit extern zugeführten Daten und/oder Referenzmessungen verglichen.

Figur 2 zeigt das Messprinzip der hier verwendeten Lasertriangulation. In dem Sensorkopf 5 ist die Lasereinheit 7 so angeordnet, dass deren Achse die Oberfläche des Rundsiebzylinders 1 senkrecht schneidet. Die Lasereinheit 7 emittiert einen Laserstrahl 15, welcher etwa in einer ersten Höhenlage 11 von der Oberfläche des Rundsiebzylinders 1 reflektiert wird. Aufgrund der ersten Höhenlage 11 und deren Abstand von dem Sensorkopf wird der Laserstrahl 15 entlang eines ersten Reflexionsweges 16 auf die mit ihrer Achse schräg zur Sieboberfläche stehende Matrixkamera 6 zurückgeworfen und trifft mit ihrem Maximum in vereinfachter Betrachtungsweise eine erste Sensorzelle 13. Im Zuge einer weiteren Rotation um die Längsachse 4 des Rundsiebzylinders 1 gerät nun eine tiefere, zweite Höhenlage 12 in den Eingriff des Laserstrahls 15, welcher entsprechend nunmehr entlang eines zweiten Reflexionswegs 17 mit seinem Maximum auf eine zweite Sensorzelle 14 der Matrixkamera 6 gelenkt wird. Während nun eine Beaufschlagung der ersten Sensorzelle 13 eine Weitergabe eines ersten Farbwerts für den zuerst betrachteten Punkt mit der ersten Höhenlage 11 bedeutet, wird aufgrund der Beaufschlagung der zweiten Sensorzelle 14 dem zweiten betrachteten Punkt mit der zweiten Höhenlage 12 ein anderer Farbwert zugeordnet, so dass die unterschiedlichen Farbwerte bei der späteren Bildauswertung in der Datenverarbeitungseinrichtung 8 sich zu einem farbigen Bild zusammensetzen.

Vorstehend beschrieben ist somit ein Prüfverfahren, bei dem das Höhenprofil eines Rundsiebzylinders mittels eines Bildsensors erfasst und an eine Datenverarbeitungseinrichtung übermittelt wird, welche das Höhenprofil in ein Bild umsetzt und diese auswertet.

### BEZUGSZEICHENLISTE

- 1: Rundsiebzylinder
- 2: Spannzylinder
- 3: Sieb
- 4: Längsachse
- 5: Sensorkopf
- 6: Matrixkamera
- 7: Lasereinheit
- 8: Datenverarbeitungseinrichtung
- 9: Ausschnitt
- 10: Laserstreifen
- 11: erste Höhenlage
- 12: zweite Höhenlage
- 13: erste Sensorzelle
- 14: zweite Sensorzelle
- 15: Laserstrahl
- 16: erster Reflexionsweg
- 17: zweiter Reflexionsweg

## Patentansprüche

1. Verfahren zur Durchführung von Qualitätsprüfungen an Rundsiebzylindern (1), Egoutteuren oder Spannzylindern zur Herstellung von Wasserzeichenpapier, bei dem ein auf die Oberfläche eines betrachteten Zylinders gerichteter Bildsensor entweder während einer rotatorischen und/oder translatorischen Relativbewegung zwischen Bildsensor und betrachtetem Zylinder um die Längsachse (4) des Zylinders bzw. in deren Richtung, oder zwischen zwei solchen Relativbewegungen Bilddaten erfasst und an eine Datenverarbeitungseinrichtung (8) übermittelt, welche diese Bilddaten zu einer zumindest teilweisen Abbildung der Oberfläche des Zylinders kombiniert und die Abbildung einer Bildauswertung zuführt
**dadurch gekennzeichnet, dass** die Datenverarbeitungseinrichtung (8) in der Abbildung der Oberfläche des Zylinders einzelnen Prägungen des Zylinders entsprechende Bildobjekte identifiziert und deren Absolutpositionen und Relativpositionen mit extern zugeführten Daten und/oder Referenzmessungen vergleicht.

2. Verfahren gemäß Anspruch 1, **dadurch gekennzeichnet, dass** der Bildsensor im Verlauf wenigstens einer vollständigen Umdrehung des Zylinders einen Bildstreifen, entsprechend einem abgewickelten Ringabschnitt der Zylinderoberfläche, erfasst.

3. Verfahren gemäß einem der Ansprüche 1 oder 2, **dadurch gekennzeichnet, dass** die Bilderfassung mithilfe eines Lasertriangulationsverfahrens erfolgt.

4. Verfahren gemäß einem der vorhergehenden Ansprüche, **dadurch gekennzeichnet, dass** dem Antrieb des Zylinders ein Positionsgeber zugeordnet ist, welcher in Abhängigkeit von der Rotation des Zylinders Signale an den Sensorkopf (5) übermittelt, anhand derer der Sensorkopf (5) die Abtastrate des Bildsensors einstellt.

5. Verfahren gemäß einem der vorhergehenden Ansprüche, **dadurch gekennzeichnet, dass** der Sensorkopf (5) oder die Datenverarbeitungseinrichtung (8) unterschiedliche Höhenlagen (11, 12) in der Oberfläche des Zylinders in den entstehenden Bilddaten zur Visualisierung in unterschiedliche Farbstufen übersetzt.

6. Verfahren gemäß einem der vorhergehenden Ansprüche, **dadurch gekennzeichnet, dass** der Bildsensor benachbarte Bildstreifen überlappend aufzeichnet und die Datenverarbeitungseinrichtung (8) ein Gesamtbild der Oberfläche des Zylinders unter Überlappung der benachbarten Bildstreifen erstellt.

7. Verfahren gemäß einem der vorhergehenden Ansprüche, **dadurch gekennzeichnet, dass** die Datenverarbeitungseinrichtung (8) in der Abbildung der Oberfläche des Zylinders einzelnen Prägungen des Zylinders entsprechende Bildobjekte identifiziert und diese mit in einer Datenbank der Datenverarbeitungseinheit (8) gespeicherten Referenzobjekten hinsichtlich der einzelnen Höhenwerte vergleicht.

8. Verfahren gemäß einem der Ansprüche, **dadurch gekennzeichnet, dass** die Datenverarbeitungseinrichtung (8) durch Sieblöcher des Zylinders hindurch erfasste, abweichende Messhöhen mithilfe von Bildbearbeitungsprozessen ausgleicht und/oder ignoriert.

## Claims

1. A method for carrying out quality checks on cylinder molds (1), dandy rolls or tensioning cylinders for the production of watermark paper, in which an image sensor directed at the surface of an observed cylinder is moved either during a rotational and/or translational relative movement between the image sensor and the observed cylinder about the longitudinal axis (4) of the cylinder or in the direction thereof, respectively, or between two such relative movements, captures image data and transmits them to a data processing device (8) which combines these image data to form an at least partial image of the surface of the cylinder and supplies the image to an image evaluation system,
**characterized in that** the data processing device (8) identifies image objects corresponding to individual embossings of the cylinder in the image of the surface of the cylinder and compares their absolute positions and relative positions with externally supplied data and/or reference measurements.

2. The method according to claim 1, **characterized in that** in the course of at least one complete rotation of the cylinder, the image sensor detects an image strip corresponding to an unwound ring section of the cylinder surface.

3. The method according to any one of claim 1 or 2, **characterized in that** image capturing is carried out by means of a laser triangulation method.

4. The method according to any one of the preceding claims, **characterized in that** the drive of the cylinder is assigned a position sensor which, depending on the rotation of the cylinder, transmits signals to the sensor head (5), on the basis of which the sensor head (5) adjusts the scanning rate of the image sensor.

5. The method according to any one of the preceding claims, **characterized in that** the sensor head (5) or the data processing device (8) translates different height levels (11, 12) in the surface of the cylinder in the resulting image data into different color levels for visualization.

6. The method according to any one of the preceding claims, **characterized in that** the image sensor records adjacent image strips in an overlapping manner and the data processing device (8) produces an overall image of the surface of the cylinder by overlapping the adjacent image strips.

7. The method according to any one of the preceding claims, **characterized in that** the data processing device (8) identifies image objects corresponding to individual embossings of the cylinder in the image of the surface of the cylinder and compares them regarding the individual height values with reference objects stored in a database of the data processing unit (8).

8. The method according to any one of the preceding claims, **characterized in that** the data processing device (8) offsets and/or ignores deviating measuring heights detected through screen holes of the cylinder by means of image processing processes.

## Revendications

1. Procédé permettant d'effectuer des contrôles de qualité sur des formes rondes (1), des égoutteurs ou des cylindres de serrage pour la production de papier à filigrane, dans lequel, soit pendant un déplacement relatif par rotation et/ou translation entre le capteur d'image et le cylindre observé autour de l'axe longitudinal (4) du cylindre ou dans la direction dudit axe, soit entre deux de ces déplacements relatifs, un capteur d'image tourné vers la surface d'un cylindre observé acquiert des données d'image et les transmet à un dispositif de traitement de données (8) qui assemble ces données d'image en une reproduction au moins partielle de la surface du cylindre et amène la reproduction à une analyse d'image,
**caractérisé en ce que** le dispositif de traitement de données (8) identifie sur la reproduction de la surface du cylindre des objets d'image correspondant à des gravures individuelles du cylindre, et compare leurs positions absolues et leurs positions relatives à des données amenées en externe et/ou à des mesures de référence.

2. Procédé selon la revendication 1, **caractérisé en ce que** le capteur d'image acquiert au cours d'au moins un tour complet du cylindre une bande d'image selon une partie annulaire déroulée de la surface de cylindre.

3. Procédé selon l'une quelconque des revendications 1 ou 2, **caractérisé en ce que** l'acquisition d'image est effectuée au moyen d'un procédé de triangulation laser.

4. Procédé selon l'une quelconque des revendications précédentes, **caractérisé en ce qu'**à l'entraînement du cylindre est attribué un transmetteur de position qui transmet à la tête de capteur (5) des signaux en fonction de la rotation du cylindre à l'aide desquels la tête de capteur (5) règle la fréquence d'échantillonnage du capteur d'image.

5. Procédé selon l'une quelconque des revendications précédentes, **caractérisé en ce que** la tête de capteur (5) ou le dispositif de traitement de données (8) convertit différentes positions en hauteur (11, 12) dans la surface du cylindre en différents niveau de couleur dans les données d'image en vue de la visualisation.

6. Procédé selon l'une quelconque des revendications précédentes, **caractérisé en ce que** le capteur d'image enregistre des bandes d'image adjacentes avec un recouvrement et le dispositif de traitement de données (8) crée une image globale de la surface du cylindre en appliquant un recouvrement des bandes d'image voisines.

7. Procédé selon l'une quelconque des revendications précédentes, **caractérisé en ce que** le dispositif de traitement de données (8) identifie sur la reproduction de la surface du cylindre des objets d'image correspondant à des gravures individuelles du cylindre et les compare à des objets de référence stockés dans une base de données de l'unité de traitement de données (8) concernant les valeurs de hauteur individuelles.

8. Procédé selon l'une quelconque des revendications, **caractérisé en ce que** le dispositif de traitement de données (8) compense à l'aide de processus de traitement d'image et/ou ignore des hauteurs de mesure divergentes, acquises à travers des perforations du cylindre.
